# EUROPEAN PATENT APPLICATION

(11) **EP 1 088 482 A1**
(43) Date of publication of application: **04.04.2001**
(21) Application number: 99307706.4
(22) Date of filing: 29.09.1999
(51) Int. Cl.: A21B 2/00, A23L 1/01

(54) **Production of prepared meals**

(71) Applicant: Oscar Mayer Limited, Chard, Somerset TA20 1AA (GB)
(72) Inventor: Willett, Geoffrey, Chard, Somerset TA20 1AA (GB); Hands, Derek, Chard, Somerset TA20 1AA (GB)
(74) Representative: Brown, Michael Stanley

(57) **Abstract**

Prepared meals intended to be heated in a microwave oven by the final customer are given a browned upper surface. The meals are placed in plastic trays (10) which are placed in openings (12) in the upper run of a conveyor (11). The trays (10) are brought into register with a series of radiant heating elements (18) contained in housings (17) which are lowered into positions adjacent the upper surfaces of the meals. The undersides of the trays (10) are subjected to a cooling air flow to prevent softening of the plastics material from which the trays (10) are formed.

## Description

### Field of the Invention

This invention relates to the production of prepared meals and, in particular, to the production of meals intended to be heated by the consumer in a microwave oven before being served.

Microwave ovens effectively cook or heat foodstuffs from the inside and, although some microwave ovens have a facility for effecting grilling of the foodstuffs, most microwave ovens do not have such a facility.

For many traditional meals, e.g. those with a cheese or potato topping, the presence of a "browned" upper surface is often taken as in indication that the meal has been properly cooked. Prepared meals which are subsequently heated in a microwave oven which does not have a grilling facility may thus look as if they have not been "properly" cooked and are thus lacking in customer appeal.

One proposal for the production of prepared meals of the above kind is described in British Patent Specification No. 2 265 545. It includes placing the prepared meals in rows of containers on a conveyor which moves the rows of containers past a heat source while portions of the containers are subjected to a flow of cooling air obtained from ducts located between the rows of containers.

It is an object of the present invention to provide a method for the production of prepared meals which is an improvement over that described in British Patent Specification No. 2 265 545.

It is also an object of the present invention to provide an improved apparatus for use in the production of prepared meals.

### Summary of the Invention

According to a first aspect of the present invention there is provided a method for the production of prepared meals, which method comprises providing a plurality of plastic trays each of which contains a prepared meal, delivering the trays containing the meals onto a supporting structure which is caused to advance so that the trays are brought successively into alignment with radiant heating means disposed above the supporting structure, and providing a cooling flow of air, characterised in that the supporting structure is formed with openings in which the trays are received, the trays serving to close the openings, and that the cooling flow of air is provided beneath the supporting structure so as to effect cooling of the undersides of the trays,

Each tray is conveniently of rectangular form in plan view and has side walls inclined at small acute angles to the vertical.

The trays are preferably formed of polyethylene terephthallate (PET) and the supporting structure is preferably made from stainless steel slats arranged to provide the openings to receive the trays. The trays thus serve to close the openings in the supporting structure when they are in position to provide a barrier preventing the flow of the cooling air upwardly through the supporting structure.

According to a second aspect of the present invention there is provided apparatus for use in the production of prepared meals contained in plastic trays, said apparatus comprising:-
a) a supporting structure formed with openings to receive the trays,
b) radiant heating means disposed above the supporting structure, and
c) means for maintaining a cooling flow of air beneath the trays while they are in the openings in the supporting structure,
with the arrangement such that the trays serve to close the openings in the supporting structure which is caused to advance so that the trays are brought successively into alignment with the radiant heating means which effect controlled heating of the upper surfaces of the meals while the undersides of the trays are being cooled by means of said cooling flow of air.

The supporting structure preferably includes a plurality of openings arranged in rows extending transversely to the direction of advance of the supporting structure and there is preferably a plurality of rows of radiant heating elements extending transversely to the direction of advance of the supporting structure so that each prepared meal is brought successively into alignment with a number of radiant heating elements, i.e. into alignment with a radiant heating element in each of the rows.

There will preferably be a predetermined number of openings in each transverse row of openings, with a constant spacing between adjacent rows and a constant spacing between adjacent openings in each row. The arrangement will preferably be such that the supporting structure is caused to advance, at predetermined time intervals, by a distance corresponding to the distance between the centres of adjacent rows of openings, with a transfer mechanism operating, during the time interval between successive advancing movements of the supporting structure, to place trays containing the meal constituents in a transverse row of openings.

In a typical installation, there may be six openings in each transverse row of openings, with the total number of rows depending on the overall size of the installation. In such typical installation, there may be five rows of radiant heating elements and six heating elements in each row so that each tray is brought into alignment with five radiant heating elements as a result of advancing movement of the supporting structure.

Each radiant heating element is preferably a metallic heating element and control means are preferably provided for setting the temperature of operation of the heating elements in dependence on the nature of the constituents of the meals. The temperature of operation may typically be varied within the range of from 550° C. to 600° C., with a higher temperature being selected when the topping of the meal comprises slices of potato than when the topping comprises a cheesy sauce.

The radiant heating elements are preferably contained within housings which are formed with ventilation slots and are so shaped as to focus the radiant heat onto the upper surfaces of the meals in the trays. The housings are preferably mounted on transverse frame members movable vertically by means of piston and cylinder mechanisms so that the radiant heating elements can be moved upwardly away from the trays containing the meals during advancing movement of the trays.

The housings for the radiant heating elements are preferably arranged to enter the trays when the radiant heating elements are in their lowered positions, the lower edge portions of the housings than acting as shrouds to prevent the direct radiation of heat from the radiant heating elements on to the side walls of the trays.

Thus, a typical cycle of operations may comprise the following actions:-
a) advancing of the array of trays by a distance corresponding to the distance between the centres of the trays in adjacent transverse rows,
b) lowering of the radiant heating elements so that they are positioned closely above the meals in the trays,
c) grilling of the upper surfaces of the meals for a predetermined length of time and with a temperature setting dependent on the type of meal being prepared,
d) raising of the heating elements, and
e) the next advancing movement of the array of trays.

During steps b), c) and d), the next succeeding row of openings in the stainless steel conveyor system will be filled with trays and one row of trays will be removed from the openings at a discharge/packing station.

Throughout the whole procedure, cooling air will be caused to flow beneath the support surface afforded by the stainless steel conveyor and underneath the undersides of the trays, thereby ensuring that the edges of the trays are not melted or otherwise deformed so that, after the upper surfaces of the meals have been grilled, lids or coverings can be placed over the meals in the trays and packaging of the meals can be completed.

The prepared meals will thus be supplied with grilled or browned upper surfaces so that, when the customer subsequently places a meal in a microwave oven, the heated meal obtained after microwaving will have a browned "home-cooked" appearance.

### Brief Description of the Drawings

Figure 1 is a perspective view showing the principles of operation of the apparatus,

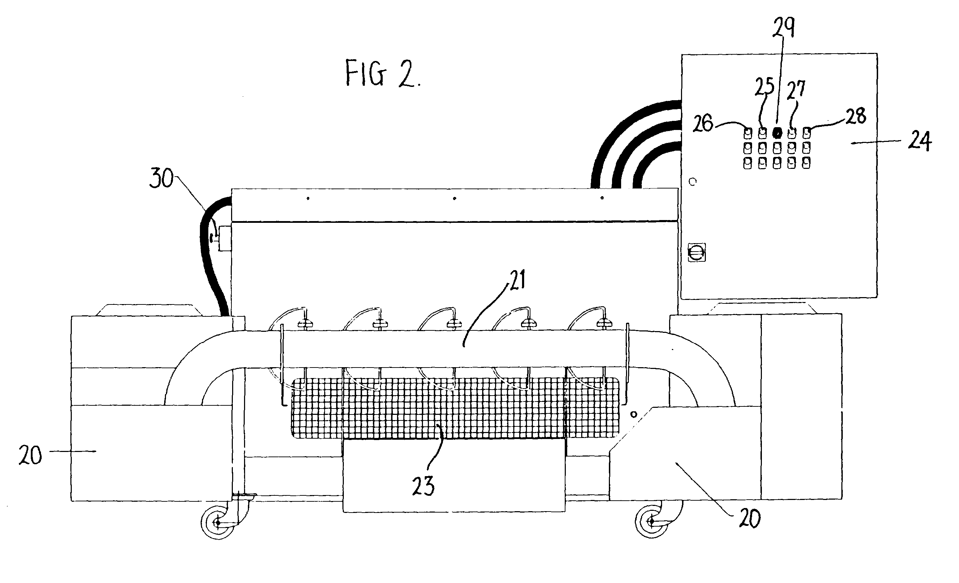

Figure 2 is a side view of the apparatus,

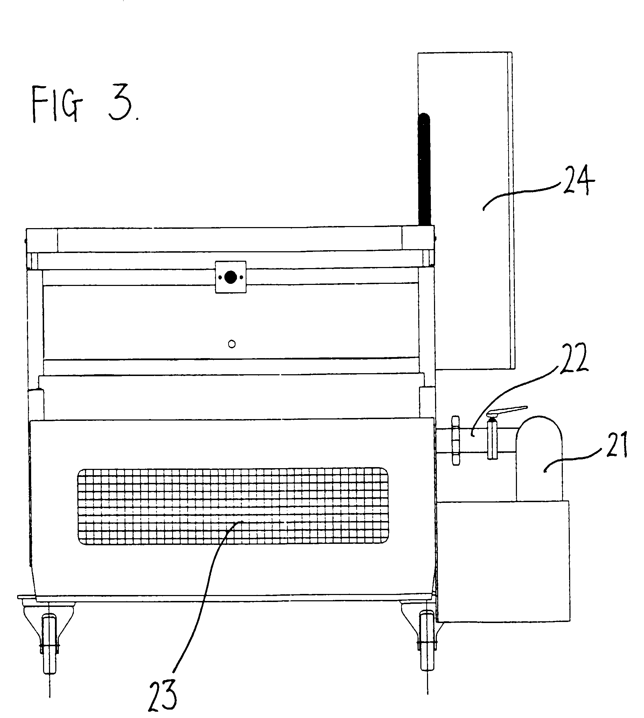

Figure 3 is an end view of the apparatus,
Figure 4 is a side view showing the cold air flow beneath the trays containing the prepared meals,
Figure 5 is an underneath plan view of the cold air supply system,
Figure 6 is a perspective view of the housing for a radiant heating element,
Figure 7 is a partly broken away view showing the heating element within the housing, and
Figure 8 shows a take-off attachment for transferring the trays at the discharge station to a further station at which lids are applied to the trays.

### Description of the Preferred Embodiment

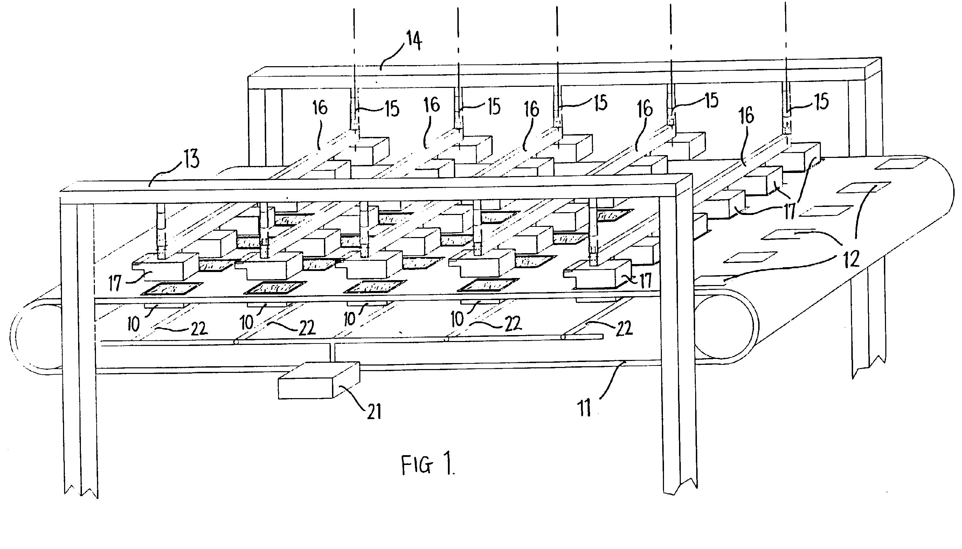

The apparatus shown in Figure 1 is part of a production line for the preparation of meals intended to be heated by the purchaser in a microwave oven. Upstream of the apparatus of Figure 1, there is a transfer system for causing advancing movement of a plurality of polyethylene terephthallate (PET) trays 10 through a number of stations at which the food ingredients making up the meals are placed in the trays 10, normally finishing with, for example, a potato or cheese or breadcrumbs topping. Such transfer systems are well known and widely in use for the preparation of a range of different kinds of meals.

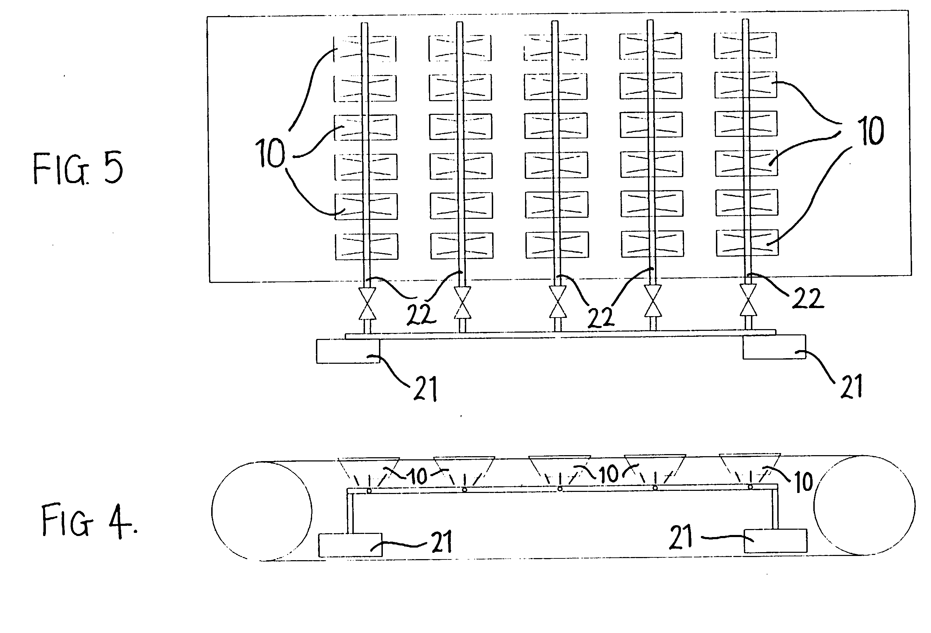

The apparatus of Figure 1 includes an endless loop conveyor 11 made from stainless steel slats and formed with openings 12 to receive the trays 10. As shown, the openings 12 are arranged in transverse rows each containing six openings and, at the loading station, the trays 10 containing the meals are placed in the openings. The conveyor 11 is caused to advance in a stepwise manner by means of a drive motor (not shown). The trays 10 are of rectangular form in plan view and, as illustrated in Figure 4, have sloping sides such that, when they are placed in the openings 12, the majority of each tray 10 will project downwardly below the upper run of the conveyor 11, the trays 10 being of such size that they will be supported by the boundaries of the openings 12 and will not pass completely through the openings 12.

The conveyor 11 is arranged between a pair of side frame members 13 and 14 on which are mounted pneumatically operated piston and cylinder mechanisms 15 for effecting upward and downward movement of transverse frame members 16 on which housings 17 containing radiant heating elements 18 are mounted.

In the particular arrangement shown in Figure 1, there are five transverse frame members 16 and six housings 17 mounted on each frame member 16, i.e. a total of thirty housings 17 and thirty radiant heating elements 18.

The spacings between the rows of openings 12 in the conveyor 11 are the same as the spacings between adjacent frame members 16. Each tray 10 will accordingly be brought into register with five of the radiant heating elements 18 as the tray 10 is moved along the top run of the endless conveyor 11 from the loading station to the discharge station.

The length of a cycle of operations will depend on the nature of the prepared meal but, with meals having a potato topping, a ten second cycle will be typical. In a cycle, there will be the following operations:-
1) advancing of the conveyor 11 by a distance corresponding to the distance between the centres of the trays 10 in adjacent transverse rows so as to move the trays 10 at the loading station into register with the first row of radiant heating elements 18, to move the trays 10 previously in register with the first row of radiant heating elements 18 into register with the second row of radiant heating elements 18, and so on,
2) lowering of the transverse frame members 16 and thus the radiant heating elements 18 so that the heating elements 18 are positioned closely above the meals in the trays 10,
3) holding the heating elements 18 in their lowered positions for a predetermined length of time, typically six seconds, so as to grill the upper surfaces of the meals in the trays 10, and
4) raising the heating elements 18 in readiness for the next advancing movement of the conveyor 11.

Four seconds will thus be allowed for raising the heating elements 18, advancing the conveyor 11 and lowering the heating elements 18.

Although the first transverse frame member 16 is shown in Figure 1 in its lowered position, whilst the other frame members 16 are shown in their raised positions, it will be appreciated that all five transverse frame members 16 will be moved in unison between their raised and lowered positions.

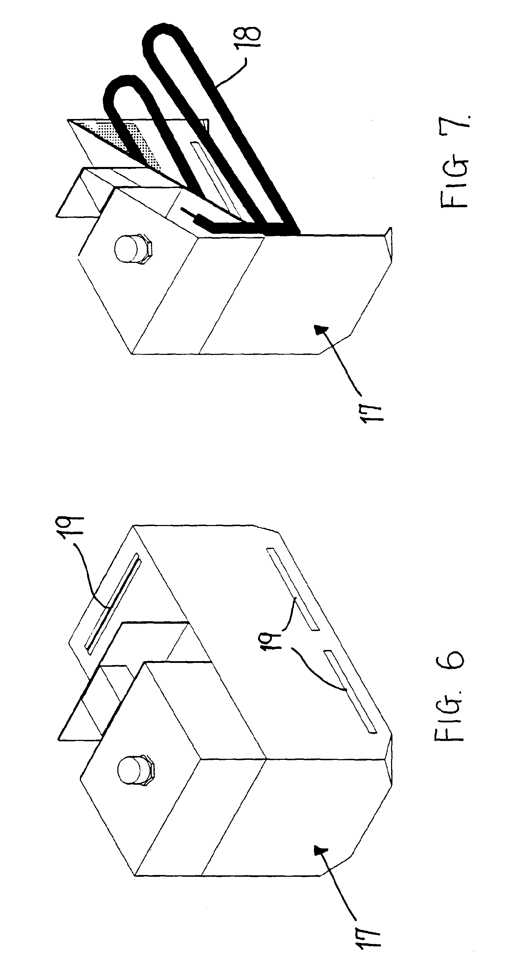

As can be seen from Figures 6 and 7, the housing 17 for each radiant heating element 18 is of rectangular form in plan view, corresponding to the configuration of each tray 10 but of slightly smaller size such that, when the housing 17 is in its lowered position, the lower edge of each wall of the housing 17 will fit just within the respective tray 10.

As shown in Figure 6, each housing 17 is formed with ventilation slots 19 to allow the escape of steam and hot air when the radiant heating elements 18 are in use, the internal surfaces of the housings 17 acting as reflectors to ensure effective radiation of the heat from the elements 18 on to the upper surfaces of the meals in the trays 10. The heating elements 18 are metallic heating elements and the housings 17 are of completely metallic construction to ensure that there is no possibility of glass or ceramic fragments dropping on to the meals in the trays 10.

In their lowered positions, i.e. with the lower edges of the side walls of the housings 17 fitting inside the respective trays 10, with the lower edges of the housings 17 a distance of 5 mm. below the upper edges of the trays 10, the heating elements 18 are spaced 100 mm. from the upper surfaces of the meals in the trays 10. Each radiant heating element 18 is typically a 1.5 kilowatt element and is wired in series with a thermal coupling which is set so as to ensure that the temperature of the heating element 18 does not exceed 620° C.

One or more fans or blowers is or are mounted on the structure of the apparatus, each behind a guard 20 and arranged to deliver cool air into a manifold 21 (as shown in Figure 1) or into a pair of manifolds 21 (as shown in Figure 4) for passage through lines 22 which are connected to orifices positioned beneath the undersides of the bases of the trays 10. Air at, for example, 1°, 2°, or 3° C. is thus caused to flow beneath the undersides of the trays 10 and the temperature of the air and the rate of flow is so maintained as to ensure that there will be no softening of the plastics material, i.e. PET, from which the trays 10 are made. The temperature and rate of airflow may thus be such as to ensure that the temperature of the plastics material is no greater than 150° C. The airflow will be maintained so as to ensure that the whole of the upper run of the conveyor 11 is cooled, the cooling air exiting through openings 23 at the sides and ends of the structure on which the conveyor 11 is mounted.

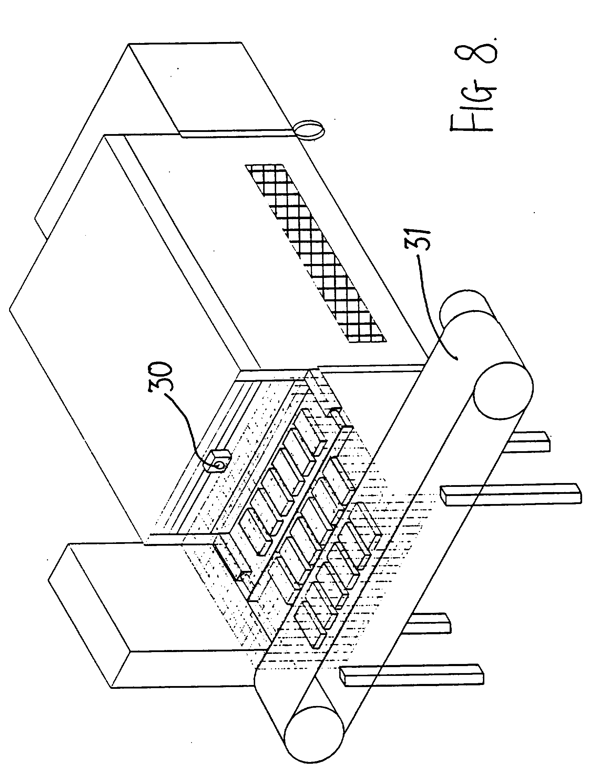

A control panel 24 is mounted on the structure adjacent the loading station. It includes on and off buttons 25 and 26, cycle start and stop buttons 27 and 28, rows of heater buttons and an emergency stop button 29. There is also an emergency stop button 30 adjacent the discharge station, at which the rows of trays 10 containing the meals with grilled or browned tops are removed from the openings 12 in the conveyor 11 and transferred, as shown in Figure 8, to a further station at which a lid is placed on top of, and sealed to, each tray 10. The transfer mechanism shown in Figure 8 includes an endless belt conveyor 31 which is movable horizontally in a direction at right angles to the conveyor 11.

In the particular arrangement shown in the drawings, there are five rows of heating elements 18 and each meal is subjected to radiant heat five times during its travel from the loading station to the discharge station. Such an arrangement is suitable for meals having a potato topping. For lasagne, each meal will preferably be subjected to radiant heating four times and, for breaded products, each meal will preferably be subjected to radiant heating three times. The required number of heating cycles can be achieved either by use of dedicated apparatus having the appropriate number of rows of heating elements or by using the apparatus shown in the drawings and switching off either one or two rows of heating elements.

Each of the prepared meals, when microwaved by the final customer, will have a browned upper surface, corresponding to that which would be obtained by traditional home cooking methods, thereby giving the product enhanced customer appeal.

## Claims

1. A method for the production of prepared meals, which method comprises providing a plurality of plastic trays (10) each of which contains a prepared meal, delivering the trays (10) containing the meals onto a supporting structure (11) which is caused to advance so that the trays (10) are brought successively into alignment with radiant heating means (18) disposed above the supporting structure (11) and providing a cooling flow of air, characterised in that
the supporting structure (11) is formed with openings (12) in which the trays (10) are received, the trays (10) serving to close the openings (12), and that
the cooling flow of air is provided beneath the supporting structure (11) so as to effect cooling of the undersides of the trays (10).

2. A method as claimed in Claim 1, in which each tray (10) is of rectangular form in plan view and has side walls inclined at small acute angles to the vertical, the trays (10) being formed from polyethylene terephthallate and the supporting structure (11) being formed from stainless steel slats arranged to provide the openings (12) to receive the trays (10).

3. Apparatus for use in the production of prepared meals contained in plastic trays (10), said apparatus comprising:-
a) a supporting structure (11) formed with openings (12) to receive the trays (10),
b) radiant heating means (18) disposed above the supporting structure (11), and
c) means (21, 22) for maintaining a cooling flow of air beneath the trays (10) while they are in the openings (12) in the supporting structure (11),
with the arrangement such that the trays (10) serve to close the openings (12) in the supporting structure (11) which is caused to advance so that the trays (10) are brought successively into alignment with the radiant heating means (18) which effect controlled heating of the upper surfaces of the meals while the undersides of the trays (10) are being cooled by means of said cooling flow of air.

4. Apparatus as claimed in Claim 3, in which the supporting structure (11) includes a plurality of openings (12) arranged in rows extending transversely to the direction of advance of the supporting structure (11) and in which there is a plurality of rows of radiant heating elements (18) extending transversely to the direction of advance of the supporting structure (11) so that each prepared meal is brought successively into alignment with a number of radiant heating elements (18), and in which there is a predetermined number of openings (12) in each transverse row of openings (12), with a constant spacing between adjacent rows and a constant spacing between adjacent openings (12) in each row.

5. Apparatus as claimed in Claim 3 or Claim 4, in which each radiant heating element (18) is a metallic heating element and control means are provided for setting the temperature of operation of the heating elements (18) in dependence on the nature of the constituents of the meals.

6. Apparatus as claimed in any one of Claims 3 to 5, in which the radiant heating elements (18) are contained within housings (17) which are formed with ventilation slots (19) and are so shaped as to focus the radiant heat onto the upper surfaces of the meals in the trays (10).

7. Apparatus as claimed in Claim 6, in which the housings (17) are mounted on transverse frame members (16) movable vertically by means of piston and cylinder mechanisms (15) so that the radiant heating elements (18) can be moved upwardly away from the trays (10) containing the meals during advancing movement of the trays (10).

8. Apparatus as claim in Claim 7, in which the radiant heating elements (18) are arranged to enter the trays (10) when the radiant heating elements (18) are in their lowered positions, the lower edge portions of the housings (17) then acting as shrouds to prevent the direct radiation of heat from the radiant heating elements (18) on to the side walls of the trays (10).

9. A method for the production of prepared meals using apparatus as claimed in any one of Claims 3 to 8, in which a cycle of operations comprises the following:-
a) advancing of the trays (10) by a distance corresponding to the distance between the centres of the trays (10) in adjacent transverse rows,
b) lowering of the radiant heating elements (18) so that they are positioned closely above the meals in the trays (10),
c) grilling of the upper surfaces of the meals for a predetermined length of time and with a temperature setting dependent on the type of meal being prepared,
d) raising of the heating elements (18), and
e) the next advancing movement of the array of trays (10).
